**Europäisches Patentamt**

**European Patent Office**

**Office européen des brevets**

(19)

(11) Veröffentlichungsnummer: **0 137 312**
**B1**

## EUROPÄISCHE PATENTSCHRIFT

(12)

(45) Veröffentlichungstag der Patentschrift:
**22.06.88**

(51) Int. Cl.⁴: **C 03 B 37/14**

(21) Anmeldenummer: **84110627.1**

(22) Anmeldetag: **06.09.84**

(54) **Vorrichtung zur Herstellung von Einschnürungen in Fasern.**

(30) Priorität: **23.09.83 DE 3334565**

(43) Veröffentlichungstag der Anmeldung:
**17.04.85 Patentblatt 85/16**

(45) Bekanntmachung des Hinweises auf die Patenterteilung:
**22.06.88 Patentblatt 88/25**

(84) Benannte Vertragsstaaten:
**AT BE CH DE FR GB IT LI NL SE**

(56) Entgegenhaltungen:
**DE - A - 3 034 873**
**DE - A - 3 106 045**

**PATENT ABSTRACTS OF JAPAN Band 6, Nr. 34, 2 März 1982, Seite (P-104) (912); & JP-A-56-153309 (TOKYO SHIBAURA DENKI K.K.) 27 November 1981**

(73) Patentinhaber: **Siemens Aktiengesellschaft Berlin und München, Wittelsbacherplatz 2, D-8000 München 2 (DE)**

(72) Erfinder: **Keil, Rudolf, Dr.-Ing., Pulverturmstrasse 2, D-8000 München 45 (DE)**
Erfinder: **Mathyssek, Konrad, Dr.-Ing., Herzog-Tassilo-Ring 28, D-8011 Zorneding (DE)**

## Beschreibung

Die vorliegende Erfindung betrifft eine Vorrichtung zur Herstellung von Einschnürungen in Fasern nach dem Oberbegriff des Patentanspruchs 1. Eine solche Vorrichtung ist der DE-A-3 034 873 schematisch angegeben.

Für die optische Nachrichtentechnik mit Monomode-Glasfasern werden Sendemodule benötigt, die einen möglichst hohen Einkoppelwirkungsgrad des Halbleiterlaserlichts in die Monomode-Glasfaser erreichen. Eine mögliche Koppeloptik ist der konisch sich verjüngende Faserendabschnitt – im folgenden kurz Taper genannt – mit rundgeschmolzenem Ende (siehe Kuwahara, H.Sasaki, M. Tokoyo, N: Efficient coupling from semiconductor lasers into singlemode fibers with tapered hemispherical ends, Appl. Optics, 19 (1980) S. 2578–2583).

Die Faser wird dazu beispielsweise in einem Lichtbogen lokal bis zum Erweichungspunkt erhitzt und gespannt, so dass sie sich in dem erweichten Bereich bleibend einschnürt. Die erkaltete eingeschnürte Faser wird etwa an der engsten Stelle der Einschnürung durchtrennt und das Ende eines so erhaltenen Tapers wird wiederum im Lichtbogen zu einer Linse rundgeschmolzen. Die Stelle, an der in der Einschnürung durchtrennt wird, ist durch die Laser- und Faserparameter festgelegt, die gegeben sind durch den Fernfeldwinkel des Lasers und den Kerndurchmesser, den Manteldurchmesser und den Brechzahlsprung der Faser.

Zur Erreichung eines hohen Koppelwirkungsgrades zwischen der Laserdiode und der anzukoppelnden Monomode-Glasfaser bei möglichst einfacher Justierung, bei der keine Winkeljustierung vorgenommen werden muss, ist eine zur Faserachse symmetrische Fernfeldverteilung der aus dem Taper mit der angeschmolzenen Linse bestehenden Koppeloptik notwendig. Unter der Fernfeldverteilung der Koppeloptik ist hierbei das Fernfeld des aus der Linse am Ende des Tapers austretenden Lichts zu verstehen, wenn über das entgegengesetzte Faserende eingekoppelt wird. Eine zur Faserachse symmetrische Fernfeldverteilung kann durch einen möglichst rotationssymmetrischen Taper erreicht werden.

Aufgabe der vorliegenden Erfindung ist es, eine Vorrichtung anzugeben, mit der rotationssymmetrische Taper mit definierten Parametern reproduzierbar herstellbar sind.

Diese Aufgabe wird durch eine Vorrichtung der eingangs genannten Art gelöst, welche gemäss dem kennzeichnenden Teil des Patentanspruchs 1 zwei auf beiden Seiten der Stelle der Erhitzung der Faser durch die Heizeinrichtung angeordnete, relativ zueinander fixierte exakt fluchtende Geradführungen für die gespannte Faser und eine Spannvorrichtung aufweist, deren Spannkraft vorgebbar begrenzt ist.

Die erfindungsgemässe Vorrichtung ist im Aufbau einfach und es lassen sich mit ihr rotationssymmetrische Taper in der gewünschten Form reproduzierbar herstellen. Die erfindungsgemässe Vorrichtung gewährleistet auch einen stets gleichbleibenden Abstand zwischen einem Faserende und der Einschnürung in der Faser. Damit ist eine sehr einfache Justierung der Einschnürung für den Durchtrennungsvorgang gegeben.

Bevorzugte und vorteilhafte Ausgestaltungen der erfindungsgemässen Vorrichtung gehen aus den Ansprüchen 2 bis 21 hervor.

Die Erfindung wird beispielhaft anhand der Figuren in der folgenden Beschreibung näher erläutert. Von den Figuren zeigen:

Fig. 1 in perspektivischer Darstellung schematisch eine Vorrichtung zur reproduzierbaren Herstellung rotationssymmetrischer Taper,

Fig. 2 in perspektivischer Darstellung einen U-förmigen Trägerkörper, dessen Schenkel durch ein Plättchen mit durchgehender Führungsnut überbrückt ist,

Fig. 3 in der gleichen Darstellung den Trägerkörper nach Fig. 2 mit dem Unterschied, dass ein Mittelabschnitt des Plättchens entfernt und damit die Überbrückung unterbrochen worden ist.

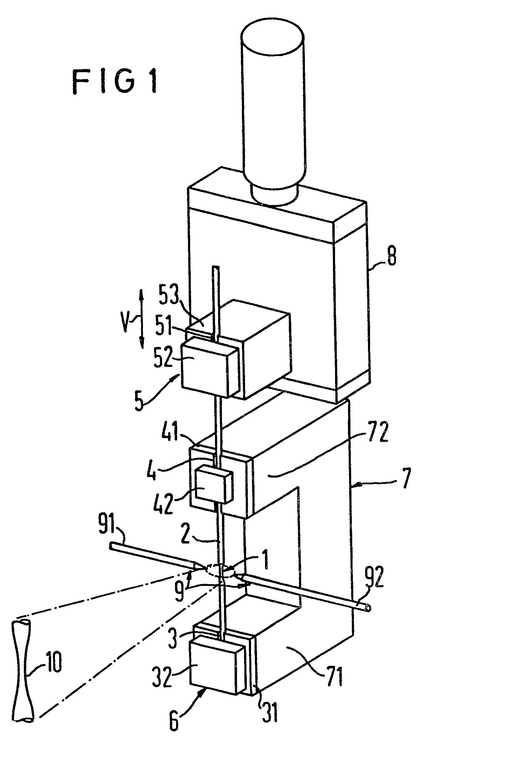

Bei der Vorrichtung nach Fig. 1 sind auf den Stirnflächen der Schenkel 71 und 72 eines U-förmigen Trägerkörpes 7 zwei Siliziumplättchen 31 und 41 geklebt, von denen jedes eine V-förmige Führungsnut 3 bzw. 4 aufweist. Diese beiden vertikal verlaufenden Führungsnuten 3 und 4 fluchten exakt und bilden die beiden relativ zueinander fixierten, exakt fluchtenden Geradführungen für die gespannte Faser 2, die in diesen Führungsnuten 3 und 4 anzuordnen ist. In der unteren Führungsnut 3 wird die Faser durch einen relativ starken Dauermagneten 32, der von dem Trägerkörper 7 angezogen wird, festgeklemmt. In der oberen Führungsnut 4 wird die Faser 2 durch einen relativ schwachen Dauermagneten 42 verschiebbar gehalten, der ebenfalls von dem Körper 7 angezogen wird.

Oberhalb der Führungsnut 4 ist auf einem Trägerkörper 53 eine weitere vertikale V-förmige Führungsnut 51 für die Faser 2 angeordnet, die mit den beiden Führungsnuten 3 und 4 im wesentlichen fluchtet. Die Faser 2 wird in dieser oberen Führungsnut 51 durch einen von dem Trägerkörper 52 angezogenen Dauermagneten 52 relativ mittlerer Stärke mit begrenzter Klemmkraft festgeklemmt.

Der Trägerkörper 53 der oberen Führungsnut 51 ist an einem vertikal, d.h. in Richtung des Doppelpfeiles V, verschiebbaren Schiebetisch 8 mit Motorantrieb befestigt. Dadurch ist die obere Führungsnut 51, die zusammen mit dem Dauermagneten 52 mittlerer Stärke eine relativ zu den Führungsnuten 3 und 4 bewegliche Haltevorrichtung 5 bildet, vertikal von der untersten Führungsnut 3, die zusammen mit dem starken Dauermagneten 32 eine relativ zu den beiden exakt fluchtenden Geradführungen 3 und 4 fixierte Haltevorrichtung 6 bildet, fortbewegbar.

Durch diese Fortbewegung der oberen Klemmvorrichtung 5 von der unteren relativ fixierten Klemmvorrichtung 6 wird die in den Führungsnuten 3, 4 und 51 gehaltene Faser gespannt. Der Dauermagnet 52 mittlerer Stärke der oberen Klemmvorrichtung 5, der im Vergleich zum starken Dauermagneten 32 der unteren Klemmvorrichtung schwächer ist, bewirkt, dass beim Fortbewegen der oberen Klemmvorrichtung 5 von der unteren Klemmvorrichtung 6 ab dem erreichen einer von der mittleren Stärke des Magneten 52 abhängigen Zuspannung in der Faser 2 diese Faser relativ zur oberen Klemmvorrichtung 5 durchrutscht, während sie in der unteren Klemmvorrichtung 6 weiterhin festgehalten wird. Die obere Klemmvorrichtung 5 bildet auf diese Weise ein Grenzkraft-Reibgesperre, welches die Zugspannung in der Faser 2 nach oben begrenzt, während die Faser selbst in ihrer Position relativ zu den beiden Geradführungen 3 und 4 unverändert bleibt.

Wird während des relativen Durchrutschens der Faser 2 durch die obere Klemmvorrichtung 5 der Lichtbogen der als Wechselstromlichtbogeneinrichtung ausgebildeten Heizeinrichtung 9 gezündet und die Faser an einer Stelle 1 zwischen den beiden Geradführungen 3 und 4 durch diesen Lichtbogen lokal bis zum Erweichungspunkt erhitzt, so greift das Grenzkraft-Reibgesperre 5 wieder, weil wegen der Nachgiebigkeit des erweichten Fasermaterials die Magnetkraft des Magneten 52 der oberen Klemmvorrichtung 5 wieder zum Festklemmen der Faser 2 in der ziehenden oberen Führungsnut 51 ausreicht und man erhält aufgrund der Auseinanderbewegung der Faserabschnitte auf beiden Seiten der erweichten Stelle 1 der Faser 2 eine bleibende Einschnürung an dieser Stelle 1. Nach dem Abschalten des Lichtbogens erkaltet die Faser 2 in der erweichten Stelle sehr rasch und die Faser 2 rutscht relativ zur Klemmvorrichtung 5 wieder durch.

Anstelle eines Grenzkraft-Reibgesperres in Form der Klemmvorrichtung 5 kann auch eine die Klemmvorrichtung 5 mit einem Antriebsmotor zum Bewegen dieser Klemmvorrichtung 5 verbindende Rutschkupplung verwendet werden, wobei dafür zu sorgen ist, dass sowohl der Magnet 32 der unteren Klemmvorrichtung 6 als auch der Magnet 52 der oberen Klemmvorrichtung ausreichend stark sind, so dass die Rutschkupplung rutscht, bevor die Faser relativ zu den Klemmvorrichtungen 5 und 6 durchrutscht.

Die Steilheit der Einschnürung in der erweichten Stelle 1 die beispielhaft und vergrössert herausgezeichnet und mit 10 bezeichnet ist, wird im wesentlichen durch den Elektrodenabstand der senkrecht zur gespannten Faser 2 angeordneten Elektroden 91 und 92 der Wechselstromlichtbogeneinrichtung 9, durch die Stromstärke des Lichtbogens und durch die Ziehgeschwindigkeit bestimmt, mit der die beiden Klemmvorrichtungen 5 und 6 auseinander bewegt werden. Die Länge der Einschnürung 10 hängt von der Brenndauer des Lichtbogens und von der genannten Ziehgeschwindigkeit ab. Alle genannten Parameter lassen sich gut einstellen, so dass die Form der Einschnürung und damit die Form des Tapers reproduzierbar sind. Die Kraft des Dauermagneten 52 der oberen Klemmvorrichtung 5 ist über einen weiten Bereich unkritisch und hat praktisch keinen Einfluss auf die Form der Einschnürung 10. Dies erklärt sich aus dem raschen Temperaturanstieg der Faser 2 im Lichtbogen. Ein stärkerer Magnet 52 bewirkt nur einen etwas früheren Beginn des Ziehvorgangs. Zu grosse Klemmkräfte in der oberen Klemmvorrichtung 5 bewirken ein Abreissen der Faser 2 in der Einschnürung 10. Dagegen ist bei zu kleinen Kräften, die beispielsweise kleiner als 1 mN sind, das Ziehen einer Einschnürung nicht mehr reproduzierbar möglich. Für die reproduzierbare Herstellung der Einschnürung sollte die Zugkraft, ab der die Faser 2 relativ zur Klemmvorrichtung 5 durchrutscht, etwa 0,3 N betragen.

Die Rotationssymmetrie der Einschnürung 10 ist nur gewährleistet, wenn die Führungsnuten 3 und 4 zur Aufnahme der Faser 2 zueinander exakt fluchten, d.h. keinen Winkel- oder Achsversatz aufweisen. Dadurch wird das Auftreten von Querkräften vermieden, die beim Erweichen der Faser 2 zu einer seitlichen Verbiegung der Einschnürung 10 führen. Es wurde die Erkenntnis gewonnen, dass die erforderliche exakte Ausrichtung von Führungsnuten auf realtiv zueinander bewegten Teilen mit vertretbarem Aufwand praktisch nicht möglich ist. Die Verwendung von wenigstens zwei auf beiden Seiten der Stelle 1 der Erhitzung der Faser 2 angeordneten, relativ zueinander fixierten und exakt fluchtenden Geradführungen 3 und 4 für die gespannte Faser 2 gewährleisten die Rotationssymmetrie der Einschnürung 10.

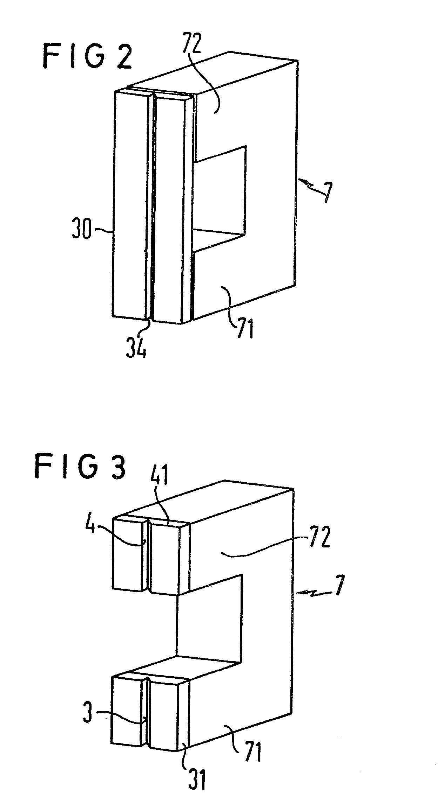

Die genaue Ausrichtung der beiden Geradführungen 3 und 4 kann vorteilhaft gemäss den Figuren 2 und 3 dadurch erreicht werden, dass beispielsweise ein Quarz- oder Siliziumplättchen 30 mit einer geradlinig verlaufenden, durchgehenden, V-förmigen Führungsnut 34 auf den Stirnflächen der Schenkel 71 und 72 des U-förmigen Trägerkörpers 7 befestigt wird, wobei die Länge der Nut 34 so bemessen ist, dass sie zusammen mit dem Plättchen 30 die beiden Schenkel 71 und 72 überbrückt. Durch Herausschneiden eines Mittelabschnitts des Plättchens 30 über dem Zwischenraum zwischen den beiden Schenkeln 71 und 72 entsteht dann der in Figur 3 dargestellte Trägerkörper 7 mit den darauf befestigten exakt fluchtenden Geradführungen 3 und 4 in Form V-förmiger Führungsnuten in den verbliebenen Plättchenabschnitten 31 und 41. Ein solches Verfahren ist beansprucht in der Europäischen Patentanmeldung EP-A-0 232 520 des selben Anmelders. Die V-förmigen Führungsnuten, die auch trapezförmig sein können, werden bei einem Siliziumplättchen durch Ätzen und bei einem Glasplättchen durch Schneiden hergestellt.

Für die Herstellung von Lasermodulen werden kunststoffummantelte Fasern verwendet. Bei diesen ist es notwendig, dass bis kurz, beispielsweise 10 mm und weniger hinter dem Taper der etwa 1 mm dicke Kunststoffmantel auf der Faser verbleibt. Dazu werden unterschiedlich tiefe Führungsnuten hergestellt, um den Dickenunterschied zwischen der nackten Faser mit einem Durchmesser von 130 µm in der unteren Führungsnut 3 und dem Kunststoffmantel in den beiden anderen Führungsnuten 4 und 51 auszugleichen.

Zur Herstellung eines Tapers muss eine Einschnürung 10 an einer Stelle mit bestimmtem Durchmesser quer zu ihrer Längsachse durchtrennt werden. Diese Stelle ist wegen des flachen Winkels der Einschnürung und des allmählichen Übergangs zwischen der Faser und der Einschnürung schwer zu finden. Unter der Voraussetzung, dass das Ende einer einzuschnürenden Faser an einer definierten Stelle der oder in einer definierten Entfernung von den beiden Geradführungen 3 und 4 liegt, und die Einschnürungen reproduzierbar gezogen werden, kann die Stelle für den Schnitt durch Messen von diesem Faserende aus leicht gefunden werden. Dies kann beispielsweise durch eine im konstanten Abstand von den Elektroden 91 und 92 der Heizeinrichtung 9 angeordnete feste Markierung erreicht werden, auf die das Faserende vor dem Einschnürungsvorgang eingestellt wird.

Bei der in den Figuren dargestellten Vorrichtung bildet die obere Klemmvorrichtung 5 das Grenzkraft-Reibgesperre. Anstelle dessen kann die Vorrichtung aber auch so ausgebildet sein, dass die untere Klemmvorrichtung 6 als Grenzkraft-Reibgesperre ausgebildet ist, während die obere Klemmvorrichtung 5 die Faser 2 nach oben mitzieht, wenn diese relativ zum unteren Grenzkraft-Reibgesperre 6 durchrutscht. Mit einer solchen Vorrichtung können relativ schlanke Einschnürungen 10 hergestellt werden, weil die Faser 2 relativ zu den Elektroden 91 und 92 während des Erweichungsvorganges noch verschoben wird.

**Patentansprüche**

1. Vorrichtung zur Herstellung von Einschnürungen in Fasern (2), mit einer Spannvorrichtung (5, 6) zum Spannen der Faser und mit einer Heizeinrichtung (9) zum kurzzeitigen lokalen Erhitzen der gespannten Faser auf eine Erweichungstemperatur, bei der sich eine bleibende Einschnürung (10) in der Faser bildet, wobei die in der Faser erzeugte Zugspannung und die kurzzeitige lokale Erhitzung so aufeinander abgestimmt sind, dass der Faserzusammenhang gewahrt bleibt, gekennzeichnet durch zwei auf beiden Seiten der Stelle (1) der Erhitzung der Faser (2) durch die Heizeinrichtung (9) angeordnete, relativ zueinander fixierte, exakt fluchtende Geradführungen (3, 4) für die gespannte Faser (2) und durch eine Spannvorrichtung (5, 6), deren Spannkraft vorgebbar begrenzt ist.

2. Vorrichtung nach Anspruch 1, dadurch gekennzeichnet, dass die beiden Geradführungen (3, 4) aus Führungsnuten bestehen, die auf den Stirnflächen der beiden Schenkel (71, 72) eines U-förmigen Trägerkörpers (7) angeordnet sind.

3. Vorrichtung nach Anspruch 2, dadurch gekennzeichnet, dass die auf einem Schenkel (71, 72) des Trägerkörpers angeordnete Geradführung (3, 4) in Form einer Führungsnut in ein plattenförmiges Substrat (31, 41) eingebracht ist, das auf der Stirnfläche dieses Schenkels (71, 72) befestigt ist.

4. Vorrichtung nach Anspruch 3, dadurch gekennzeichnet, dass eine Geradführung (3, 4) in Form einer Führungsnut einen dreieck- oder trapezförmigen Querschnitt aufweist.

5. Vorrichtung nach einem der Ansprüche 2 bis 4, insbesondere nach Anspruch 4, dadurch gekennzeichnet, dass ein Substrat (31, 41) aus anisotrop ätzbarem Material besteht, in das die Führungsnut durch anisotropes Ätzen eingebracht ist.

6. Vorrichtung nach Anspruch 5, dadurch gekennzeichnet, dass ein Substrat (31, 41) aus Silizium besteht.

7. Vorrichtung nach einem der Ansprüche 2 bis 4, insbesondere nach Anspruch 4, dadurch gekennzeichnet, dass ein Substrat (31, 41) aus Glas besteht, in das die Führungsnut durch Schneiden eingebracht ist.

8. Vorrichtung nach einem der Ansprüche 2 bis 7, dadurch gekennzeichnet, dass eine Spannbacke (32, 42) vorgesehen ist, welche die in einer als Führungsnut ausgebildeten Geradführung angeordnete Faser (2) verschiebbar haltert, wobei sie gegen die Führungsnut und/oder Faser (2) lastet.

9. Vorrichtung nach einem der vorhergehenden Ansprüche, dadurch gekennzeichnet, dass die Spannvorrichtung (5 mit 6) zwei in Längsrichtung der beiden Geradführungen (3, 4) mit vorbestimmter Ziehgeschwindigkeit auseinanderbewegbare Haltevorrichtungen (5, 6) zum Halten und Spannen der Faser (2) und ein Grenzkraft-Reibgesperre (5) zum Begrenzen der durch die auseinanderbewegten Haltevorrichtungen (5, 6) erzeugten Zugspannung aufweist.

10. Vorrichtung nach Anspruch 9, dadurch gekennzeichnet, dass eine Haltevorrichtung (5, 6) als eine Klemmvorrichtung ausgebildet ist, die eine auf einem Trägerkörper (71, 53) angeordnete und zu einer Geradführung (3, 4) zumindest im wesentlichen fluchtende Führungsnut (3, 51) aufweist, in der die zugeordnete Faser (2) anzuordnen und mittels einer gegen die Faser lastenden Spannbacke (32, 52) in dieser Führungsnut (3; 51) festklemmbar ist.

11. Vorrichtung nach Anspruch 9 oder 10, dadurch gekennzeichnet, dass eine (5) der beiden Haltevorrichtungen (5, 6) als das Grenzkraft-Reibgesperre ausgebildet ist.

12. Vorrichtung nach Anspruch 10 und 11, dadurch gekennzeichnet, dass das Grenzkraft-Reibgesperre (5) als eine Klemmvorrichtung ausgebildet ist, die eine auf einem Trägerkörper (53) angeordnete und zu einer Geradführung (3, 4) zumindest im wesentlichen fluchtende Führungsnut (51) aufweist, in der die zugeordnete Faser (2) anzuordnen und mittels einer gegen die Faser (2) lastenden Spannbacke (52) mit vorgebbar begrenzter Klemmkraft in dieser Führungsnut (51) festklemmbar ist.

13. Vorrichtung nach Anspruch 8, 10, 12, dadurch gekennzeichnet, dass eine Spannbacke (32, 42, 52) durch Magnetkraft gegen die zugeordnete Führungsnut (3, 4, 51) oder die darin angeordnete Faser (2) lastet.

14. Vorrichtung nach einem der Ansprüche 9 bis 13, dadurch gekennzeichnet, dass eine der beiden Haltevorrichtungen (6) oder das Grenzkraft-Reibgesperre relativ zu den beiden exakt fluchtenden Geradführungen (3, 4) fixiert ist.

15. Vorrichtung nach Anspruch 8 und 10 oder 12 und 14, dadurch gekennzeichnet, dass die als Führungsnut ausgebildete Geradführung (3), die von den beiden Geradführungen (3, 4) zu einer relativ dazu beweglichen Haltevorrichtung (5) ferner liegt, zugleich die Führungsnut (3) der Haltevorrichtung (6) oder des Grenzkraft-Reibgesperres bildet, die oder das relativ zu den beiden Geradführungen (3, 4) fixiert und als eine Klemmvorrichtung ausgebildet ist.

16. Vorrichtung nach Anspruch 14 oder 15, dadurch gekennzeichnet, dass die Haltevorrichtung (5) oder das Grenzkraft-Reibgesperre, die oder das relativ zu den beiden exakt fluchtenden Geradführungen (3, 4) beweglich ist, auf einem in Längsrichtung der beiden Geradführungen (3, 4) bewegbaren Schiebetisch (8) mit Motorantrieb befestigt ist.

17. Vorrichtung nach einem der Ansprüche 9 bis 17, dadurch gekennzeichnet, dass das Grenzkraft-Reibgesperre durch eine zwischen eine bewegte Haltevorrichtung (5) und einen Antriebsmotor zum Bewegen dieser Haltevorrichtung (5) geschaltete Rutschkupplung gebildet ist.

18. Vorrichtung nach einem der vorhergehenden Ansprüche, dadurch gekennzeichnet, dass die Heizeinrichtung (9) aus einer Lichtbogeneinrichtung besteht, die auf die gespannte Faser (2) zwischen den beiden relativ zueinander fixierten exakt fluchtenden Geradführungen (2, 3) definiert einstellbar ist.

19. Vorrichtung nach einem der vorhergehenden Ansprüche, dadurch gekennzeichnet, dass eine (3) der beiden relativ zueinander fixierten und exakt fluchtenden Geradführungen (3, 4) dem Durchmesser eines nackten Abschnitts einer beschichteten Faser angepasst ist, während die andere Geradführung (4) und auch die Spannvorrichtung (5 mit 6) dem Aussendurchmesser der beschichteten Faser angepasst ist.

20. Vorrichtung nach einem der vorhergehenden Ansprüche, dadurch gekennzeichnet, dass die obere Grenze der durch die Spannvorrichtung (5 mit 6) ausgeübte Zugkraft bei etwa 0,3 N liegt.

21. Vorrichtung nach einem der vorhergehenden Ansprüche, dadurch gekennzeichnet, dass eine im festen Abstand von der Heizeinrichtung (9) angeordnete Markierung für die definierte Anordnung eines Endes einer einzuschnürenden Faser (2) vorgesehen ist.

## Revendications

1. Dispositif pour former des rétrécissements dans des fibres (2), comportant un dispositif (5, 6) de mise en tension de la fibre et un dispositif de chauffage (9) servant à réaliser un échauffement local et de brève durée de la fibre tendue, à une température de ramollissement, pour laquelle il se forme un rétrécissement permanent (10) de la fibre, la contrainte de traction produite dans la fibre et l'échauffement local de brève durée étant réglés l'un sur l'autre de manière que la cohésion de la fibre reste assurée, caractérisé par deux guides rectilignes (3, 4), fixés et alignés de façon précise l'un par rapport à l'autre et disposés des deux côtés de la zone (1) de chauffage de la fibre (2) par le dispositif de chauffage (9), pour la fibre tendue (2) et par un dispositif de mise en tension (5, 6), dont la force de tension est limitée d'une manière pouvant être prédéterminée.

2. Dispositif suivant la revendication 1, caractérisé par le fait que les deux guides rectilignes (3, 4) sont constitués par des rainures de guidage, qui sont ménagées dans les faces frontales des deux branches (71, 72) d'un corps de support (7) en forme de U.

3. Dispositif suivant la revendication 2, caractérisé par le fait que le guide rectiligne (3, 4) ménagé sur une branche (71, 72) du corps de support est inséré sous la forme d'une rainure de guidage dans un substrat en forme de plaque (31, 41), qui est fixé sur la face frontale de cette branche (71, 72).

4. Dispositif suivant la revendication 3, caractérisé par le fait qu'un guide rectiligne (3, 4) en forme de rainure de guidage possède une section transversale triangulaire ou trapézoîdale.

5. Dispositif suivant l'une des revendications 2 à 4, notamment la revendication 4, caractérisé par le fait qu'un substrat (31, 41) est constitué en un matériau pouvant être corrodé de façon anisotrope et dans lequel la rainure de guidage est ménagée au moyen d'une corrosion anisotrope.

6. Dispositif suivant la revendication 5, caractérisé par le fait qu'un substrat (31, 41) est réalisé en silicium.

7. Dispositif suivant l'une des revendications 2 à 4, notamment la revendication 4, caractérisé en ce qu'un substrat (31, 41) est réalisé avec du verre, dans lequel la rainure de guidage est ménagée par découpage.

8. Dispositif suivant l'une des revendications 2 à 7, caractérisé par le fait qu'il est prévu une mâchoire de serrage (32, 42) qui maintient la fibre (2) disposée dans un guide rectiligne réalisé sous la forme d'une rainure de guidage, de manière que cette fibre soit déplaçable, ladite mâchoire s'appliquant contre la rainure de guidage et/ou la fibre (2).

9. Dispositif suivant l'une des revendications précédentes, caractérisé par le fait que le dispositif de mise en tension (5 avec 6) comporte deux dispositifs de retenue (5, 6), qui peuvent être écartés l'un de l'autre avec une vitesse de tirage prédéterminée dans la direction longitudinale des deux guides rectilignes (3, 4), et un dispositif de blocage à friction (5) formant limiteur de force, servant à limiter la contrainte de traction produite par les dispositifs de retenue (5, 6) écartés l'un de l'autre.

10. Dispositif suivant la revendication 9, caractérisé par le fait qu'un dispositif de retenue (5, 6) est réalisé sous la forme d'un dispositif de blocage par serrage, qui comporte une rainure de guidage (3, 51), ménagée dans un corps de support (71, 53) et au moins sensiblement alignée avec un guide rectiligne (3, 4) et dans laquelle la fibre (2) associée doit être disposée et peut bloquée par serrage, à l'aide d'une mâchoire de serrage (32, 52) s'appliquant contre la fibre.

11. Dispositif suivant la revendication 9 ou 10, caractérisé par le fait qu'un (5) des deux dispositifs de retenue (5, 6) est réalisé sous la forme d'un dispositif de blocage à friction formant limiteur de force.

12. Dispositif suivant les revendications 10 et 11, caractérisé par le fait que le dispositif de blocage à friction (5) formant limiteur de force est réalisé sous la forme d'un dispositif de blocage par serrage, qui comporte une rainure de guidage (5), ménagée sur un corps de support (53) et au moins sensiblement alignée avec un guide rectiligne (3, 4) et dans laquelle la fibre associée (2) doit être disposée et peut être bloquée par serrage, avec une force de serrage limitée d'une manière pouvant être prédéterminée, à l'aide d'une mâchoire de serrage (52) s'appliquant contre la fibre (2).

13. Dispositif suivant les revendications 8, 10, 12, caractérisé par le fait qu'une mâchoire de serrage (32, 42, 52) est appliquée, par la force d'un aimant, contre la rainure de guidage associée (3, 4, 51) ou contre la fibre (2) disposée dans cette rainure.

14. Dispositif suivant l'une des revendications 9 à 13, caractérisé par le fait que l'un des deux dispositifs de retenue (6) ou le dispositif de blocage à friction formant limiteur de force est fixé par rapport aux deux guides rectilignes (3, 4) alignés de façon précise l'un sur l'autre.

15. Dispositif suivant les revendications 8 et 10 ou 12 et 14, caractérisé par le fait qu le guide rectiligne (3), qui est réalisé sous la forme d'une rainure de guidage est le plus éloigné des deux guides rectilignes (3, 4) de manière à former un dispositif de retenue (5) mobile par rapport aux guides rectilignes, forme simultanément la rainure de guidage (3) du dispositif de retenu (6) ou du dispositif de blocage à friction formant limiteur de force, qui est fixe par rapport aux deux rectilignes (3, 4) et est réalisé sous la forme d'un dispositif de blocage par serrage.

16. Dispositif suivant la revendication 14 ou 15, caractérisé par le fait que le dispositif de retenue (5) ou le dispositif de blocage à friction formant limiteur de force, qui est mobile par rapport aux deux guides rectilignes (3, 4) alignés de façon précise, est fixé sur une table coulissante (8) déplaçable dans la direction longitudinale des deux guides rectilignes (3, 4) et comportant un dispositif d'entraînement à moteur.

17. Dispositif suivant l'une des revendications 9 à 17, caractérisé par le fait que le dispositif de blocage à friction formant limiteur de force est formé par un accouplement à friction branché entre un dispositif de retenue (5) et un moteur d'entraînement servant à déplacer ce dispositif de retenue (5).

18. Dispositif suivant l'une des revendications précédentes, caractérisé par le fait que le dispositif de chauffage (9) est constitué par un dispositif à arc électrique, qui peut être réglé de façon définie par rapport à la fibre tendue (2) entre les deux guides rectilignes (2, 3) fixés et alignés de façon précise l'un par rapport à l'autre.

19. Dispositif suivant l'une des revendications précédentes, caractérisé par le fait que l'un (3) des deux guides rectilignes (3, 4) fixés de façon précise et alignés l'un par rapport à l'autre est adapté au diamètre d'une section nue d'une fibre enrobée, tandis que l'autre guide rectiligne (4) et également le dispositif de mise en tension (5 avec 6) est adapté au diamètre extérieur de la fibre enrobée.

20. Dispositif suivant l'une des revendications précédentes, caractérisé par le fait que la limite supérieure de la force de traction exercée par le dispositif de mise en tension (5 avec 6) est égale approximativement à 0,3 N.

21. Dispositif suivant l'une des revendications précédentes, caractérisé par le fait qu'un marquage, situé à une distance fixe du dispositif de chauffage (9), est prévu pour réaliser le montage défini d'une extrémité d'une fibre (2) devant être rétrécie.

Claims

1. Apparatus for producing contractions in fibres (2), with a tensioning device (5, 6) for tensioning the fibre and with the heating device (9) for the brief local heating of the tensioned fibre to a fusion temperature at which a permanent contraction (10) forms in the fibre, the tension generated in the fibre and the brief local heating being coordinated with one another in such a way that the fibre cohesion is preserved, characterised by two exactly aligned straight guides (3, 4) for the tensioned fibre (2) which are arranged on both sides of the point (1) of heating of the fibre (2) by the heating device (9) and which are fixed relative to one another, and by a clamping device (5, 6), the clamping force of which is limited in a predeterminable way.

2. Apparatus according to Claim 1, characterised in that the two straight guides (3, 4) consist of guide grooves which are arranged on the end faces of the two legs (71, 72) of a U-shaped carrier body (7).

3. Apparatus according to Claim 2, characterised in that the straight guide (3, 4) arranged on one leg (71, 72) of the carrier body is made in the form of a guide groove in a plate-like substrate (31, 41) which is fastened to the end face of this leg (71, 72).

4. Apparatus according to Claim, characterised in that one straight guide (3, 4) in the form of a guide groove has a triangular or trapezoidal cross-section.

5. Apparatus according to one of Claims 2 to 4, especially according to Claim 4, characterised in that a substrate (31, 41) consists of anisotropically etchable material in which guide groove is made by anisotropic etching.

6. Apparatus according to Claim 5, characterised in that a substrate (31, 41) consists of silicon.

7. Apparatus according to one of Claims 2 to 4, especially according to Claim 4, characterised in that a substrate (31, 41) consist of glass in which the guide groove is made by cutting.

8. Apparatus according to one of Claims 2 to 7, characterised in that there is a clamping jaw (32, 42) which displaceably retains the fibre (2) arranged in a straight guide designed as a guide groove and which bears against the guide groove and / or fibre (2).

9. Apparatus according to one of the preceding Claims, characterised in that the tensioning device (5 with 6) has two holding devices (5, 6) for holding and tensioning the fibre (2), which can be moved apart from one another in the longitudinal direction of the two straight guides (3, 4) at a predetermined drawing speed, and a frictional limiting-force detent (5) for limiting the tension generated by the holding devices (5, 6) moved apart from one another.

10. Apparatus according to Claim 9, characterised in that one holding device (5, 6) is designed as a clamping device having a guide groove (3, 51) which is arranged on a carrier body (71, 53) and is aligned at least essentially with a straight guide (3, 4) and in which the associated fibre (2) is to be arranged and can be clamped in this guide groove (3, 51) by means of a clamping jaw (32, 52) bearing against the fibre.

11. Apparatus according to Claims 9 or 10, characterised in that one (5) of the two holding devices (5, 6) is designed as the frictional limiting-force detent.

12. Apparatus according to Claims 10 and 11, characterised in that the frictional limiting-force detent (5) is designed as a clamping device having a guide groove (51) which is arranged on a carrier body (53) and is aligned at least essentially with a straight guide (3, 4) and in which the associated fibre (2) is to be arranged and can be clamped in this guide groove (51) with a prede- terminably limited clamping force by means of a clamping jaw (52) bearing against the fibre (2).

13. Apparatus according to Claims 8, 10, 12 characterised in that one clamping jaw (32, 42, 52) bears by means of magnetic force against the associated guide groove (3, 4, 51) or the fibre (2) arranged in it.

14. Apparatus according to one of Claims 9 to 13, characterised in that one of the two holding devices (6) of the frictional limiting-force detent is fixed relative to the two exactly aligned straight guides (3, 4).

15. Apparatus according to Claims 8 and 10 or 12 and 14, characterised in that the straight guide (3) designed as a guide groove, and which, of the two straight guides (3, 4), is further from a holding device (5) movable relative thereto, simultaneously forms, the guide groove (3) of the holding device (6) or the fricitonal limiting-force detent which is fixed relative to the two straight guides (3, 4) and which is designed as a clamping device.

16. Apparatus according to Claims 14 or 15, characterised in that the holding device (5) or the frictional limiting-force detent which is movable relative to the two exactly aligned straight guides (3, 4) is fastened to a sliding table (8) movable in the longitudinal direction of the two straight guides (3, 4) and having a motor drive.

17. Apparatus according to Claims 9 to 16, characterised in that the frictional limiting-force detent is formed by a slipping clutch inserted between a moved holding device (5) and a drive motor for moving this holding device (5).

18. Apparatus according to one of the preceding Claims, characterised in that the heating device (9) consists of an arcing device which can be adjusted specifically relative to the tensioned fibre (2) between the two exactly aligned straight guides (2, 3) fixed relative to one another.

19. Apparatus according to one of the preceding Claims, characterised in that one (3) of the two exactly aligned straight guides (3, 4) fixed relative to one another is matched to the diameter of a bare portion of a coated fibre, whilst the other straight guide (4) and also the tensioning device (5 with 6) is matched to the outside diameter of the coated fibre.

20. Apparatus according to one of the preceding Claims, characterised in that the upper limit of the tensile force exerted by the tensioning device (5 with 6) is approximately 0,3 N.

21. Apparatus according to one of the preceding Claims, characterised in that a marking arranged at a fixed distance from the heating device (9) is provided for the specific arrangement of one end of a fibre (2) to be contracted.

FIG 1

FIG 2

FIG 3